# EUROPEAN PATENT APPLICATION

(11) **EP 2 641 687 A1**
(43) Date of publication of application: **25.09.2013**
(21) Application number: 13160665.9
(22) Date of filing: 22.03.2013
(51) Int. Cl.: B23K 1/002, B23K 1/00

(54) **Brazing method making use of thermal expansion and/or contraction of workpieces**

(30) Priority: 23.03.2012 US 201213428006
(71) Applicant: General Electric Company, Schenectady, New York 12345 (US)
(72) Inventor: Rakozy, Kurt Allen, Schenectady, NY New York 12345 (US); Breznak, Jeffrey Michael, Schenectady, NY New York 12345 (US); Witney, Andrew Batton, Schenectady, NY New York 12345 (US)
(74) Representative: Cleary, Fidelma

(57) **Abstract**

A brazing method (300) includes the steps of providing (310) a first part (110) and a second part (120), at least a first portion (112) of the first part configured to fit inside a second portion (122) of the second part, preplacing (330) a non-self-fluxing braze alloy (116) on one or more of the first portion and the second portion, thermally treating (340) at least one of the first portion and the second portion, to create a temperature differential between the first portion and the second portion, inserting (350) the first portion into the second portion, and heating (360) at least one of the first portion and the second portion to melt the non-self-fluxing braze alloy. The first portion is joined by brazing to the second portion.

## Description

The invention described herein relates generally to brazing. More specifically, the invention relates to a method of brazing.

Armature stator bars in large generators are usually liquid cooled and contain a combination of individually insulated conductors, comprising both solid and hollow strands. The hollow strands are used to transmit liquid coolant, as well as electric current through the length of the armature stator bar. A header, including generator connection rings, must be fluid tight and capable of conducting electric current. This assembly is affixed to each end of each armature stator bar. All plumbing should be impervious to hydrogen leaks from the generator atmosphere, pressurized hydrogen, into the circulating cooling fluid inside the plumbing.

The headers and connection rings presently in service in generators serve as electrical connections between the stator bars or phase rings of the armature circuit and are also the sealed enclosure for transferring the liquid coolant to and from the stator bars. Conventional headers and connection rings are normally brazed to both the hollow and solid strands at each end of the stator bars. Thus, the liquid coolant is in direct contact with the brazed joints, which can result in liquid coolant leaks due to braze joint corrosion or braze joint imperfections. One known method of reducing leaks is to use phosphorus-free BAg alloys. However, this alloy family typically cannot be brazed in air without a flux, and process issues with use of a flux or reducing atmosphere present major challenges to plumbing assembly or repair. Even with the known methods, ensuing leaks of liquid coolant can damage the armature insulation and result in costly maintenance outages.

Thus, there is a need for an improved brazing method for corrosion-resistant joints.

In an aspect of the present invention, a brazing method includes the steps of providing a first part and a second part, at least a first portion of the first part configured to fit inside a second portion of the second part, preplacing a non-self fluxing braze alloy on one or more of the first portion and the second portion, thermally treating at least one of the first portion and the second portion, to create a temperature differential between the first portion and the second portion, inserting the first portion into the second portion, and heating at least one of the first portion and the second portion to melt the non-self-fluxing braze alloy. The first portion is joined by brazing to the second portion.

In another aspect of the present invention, a brazing method includes the steps of providing a first part and a second part, at least a first portion of the first part configured to fit inside a second portion of the second part, preplacing a phosphorus free braze alloy on one or more of the first portion and the second portion, cooling the first portion to thermally contract the first portion, to create a temperature differential between the first portion and the second portion, inserting the first portion into the second portion, and heating at least one of the first portion and the second portion to melt the phosphorus free braze alloy. The first portion is joined by brazing to the second portion.

In yet another aspect of the present invention, a brazing method includes the steps of providing a first part and a second part, at least a first portion of the first part configured to fit inside a second portion of the second part, preplacing a non-self-fluxing braze alloy on one or more of the first portion and the second portion, preheating the second portion, to thermally expand the second portion, and to create a temperature differential between the first portion and the second portion, inserting the first portion into the second portion, and heating at least one of the first portion and the second portion to melt the non-self-fluxing braze alloy. The first portion is joined by brazing to the second portion.
FIG. 1 illustrates a simplified perspective view of two parts before they are brazed together, according to an aspect of the present invention;
FIG. 2 illustrates a simplified perspective view of two parts after they are brazed together, according to an aspect of the present invention; and
FIG. 3 illustrates a flowchart of a brazing method, according to an aspect of the present invention.

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

A dynamoelectric machine is defined as a machine that converts mechanical energy to electrical energy or vice-versa, including but not limited to generators and motors. However, it is to be understood that the present invention could also be applied to turbomachines as well.

A brazing method is herein described for joining two parts in a reliable manner. Brazing is generally defined as a joining process wherein coalescence is produced by heating to a suitable temperature above about 800 °F and by using a suitable brazing alloy, having a melting point below that of the materials to be joined.

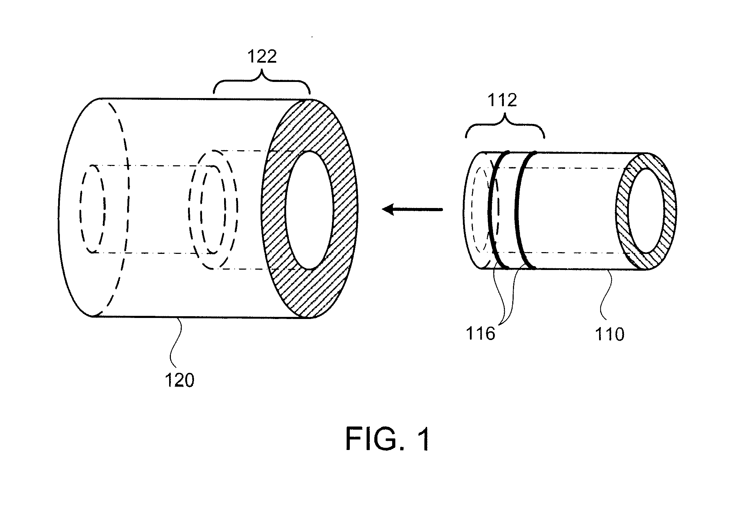

FIG. 1 illustrates a simplified perspective view of two parts needing to be joined together by brazing. The parts may be pipes, conduit or any other element for transporting a gas or fluid. A portion 112 of first part 110 is configured to fit inside a portion 122 of a second part 120. In one example, the first part 110 is a copper pipe having a first outer diameter (e.g., 1 inch). The second part 120, in this example, may also be a copper pipe or copper fitting, and the portion 122 may have an inner diameter about the same or slightly greater than the outer diameter of the first part 110 or first portion 112. For example, if the first part/portion has a 1 inch outer diameter, then the inner diameter of the second portion 122 might be about 1.004 inches to about 1.008 inches, resulting in a clearance gap of about 0.002 inches to about 0.004 inches, respectively. These dimensions are only exemplary and any suitable part dimensions and clearance gap may be used with the method of the present invention.

The two parts 110, 120 can be joined by brazing and both portions of the joint should be precleaned. In order to obtain high-quality brazed joints, the parts must be closely fitted, and the base metals must be exceptionally clean and free of oxides. In most cases, joint clearances of about 0.002 inches to about 0.008 inches are recommended for the best capillary action and joint strength. However, in some brazing operations it may be desirable to have joint clearances above or below this range. Cleanliness of the brazing surfaces is also important, as any contamination can cause poor wetting (i.e., flow of the filler metal or braze alloy). Two methods for precleaning parts, prior to brazing, are chemical cleaning, and abrasive or mechanical cleaning. In the case of mechanical cleaning, it may be desirable to maintain a predetermined surface roughness as wetting on a rough surface occurs much more readily than on a smooth surface of the same geometry.

A phosphorus free braze alloy (or phosphorus free filler metal) 116 may be used in the brazing method, according to an aspect of the present invention. A non-self-fluxing braze alloy 116 may also be used. For example, a BAg-18 alloy is comprised of silver (Ag), copper (Cu) and tin (Sn), and has a solidus point of about 1,115 °F and a liquidus point of about 1,325 °F. A BAg-24 alloy may also be used and is comprised of silver (Ag), copper (Cu), zinc (Zn) and nickel (Ni), and has a solidus point of about 1,220 °F and a liquidus point of about 1,305 °F. It is to be understood that other non-phosphorous, phosphorus free or non-self-fluxing brazing alloys may also be used as desired in the specific application. This brazing method using these type of self-fluxing alloys may also be referred to as a flux-less non-phosphorus alloy brazing method.

The braze alloy 116 may be preplaced on at least one of the parts to be joined. For example, the braze alloy can be preplaced on part 110 in the region (i.e., portion 122) of the joint. The second part 120 can be thermally treated by preheating to thermally expand the inner diameter of portion 122. The thermal treatment creates a temperature differential between the first portion and the second portion. For example, the second part 120 may be heated by induction heating to a temperature of about 400 °F to about 500 °F. It would be desirable to prevent or reduce oxidation of the heated parts during the thermal treatment step. Other heating methods (e.g., torch heating, furnace, carbon arc, resistance, etc.) and other temperature ranges above or below those listed may also be used as desired in the specific application. After the second part 120 is preheated and portion 122 has thermally expanded, the first part 110 can be inserted into the second part 120.

Alternatively, the first part 110 and/or first portion 112 can be thermally treated by cooling to contract or shrink the first part 110 and/or first portion 112. The thermal treatment creates a temperature differential between the first portion and the second portion. For example, the first portion 112 may be immersed in a nitrogen bath. The nitrogen bath may comprise liquid and/or solid nitrogen, or mixtures thereof. In this aspect, the nitrogen bath shrinks or contracts the first portion, while also providing a benefit to the method of reducing oxide formation. At cooler temperatures, oxide formation on metals (e.g., copper) is greatly reduced (or effectively eliminated) compared to a method where the metal is heated. In other aspects of the present invention, a combined cooling of the first portion and pre-heating of the second portion may be employed to create a compressive fit-up between the two parts.

The two parts form a compressive type fit-up and the thermal treatment (resulting in relative expansion and/or contraction) allows for easier insertion of the first part 120 (portion 112) into the second part 120 (portion 122). After the brazing operation and upon cooling of the second part 120, a mechanical bond is formed between the two parts.

A heating step can be performed on both parts, and this can be performed by induction heating or other suitable heating method (e.g., torch heating, furnace, carbon arc, resistance, etc.). The two parts 110, 120 (and/or portions 112 and 122) may be heated to about 1,200 °F to about 1,500 °F, or any other suitable temperature range as required by the specific materials. The heating cycle melts the braze alloy and the braze alloy distributes along the joint through capillary action. The braze alloy bonds to both parts and forms a seal preventing any undesired leaks in the joint.

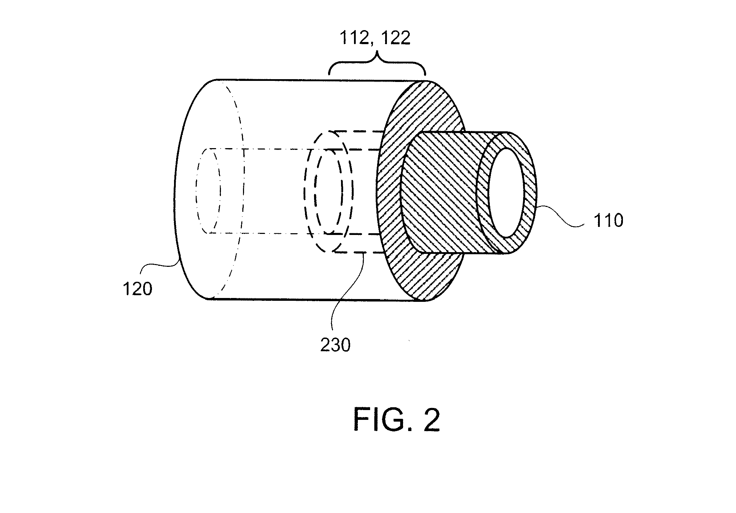

FIG. 2 illustrates a simplified perspective view of both parts after a brazing method, according to an aspect of the present invention. The first part 110 has been inserted into the second part 120 and both parts are joined or brazed together by joint 230.

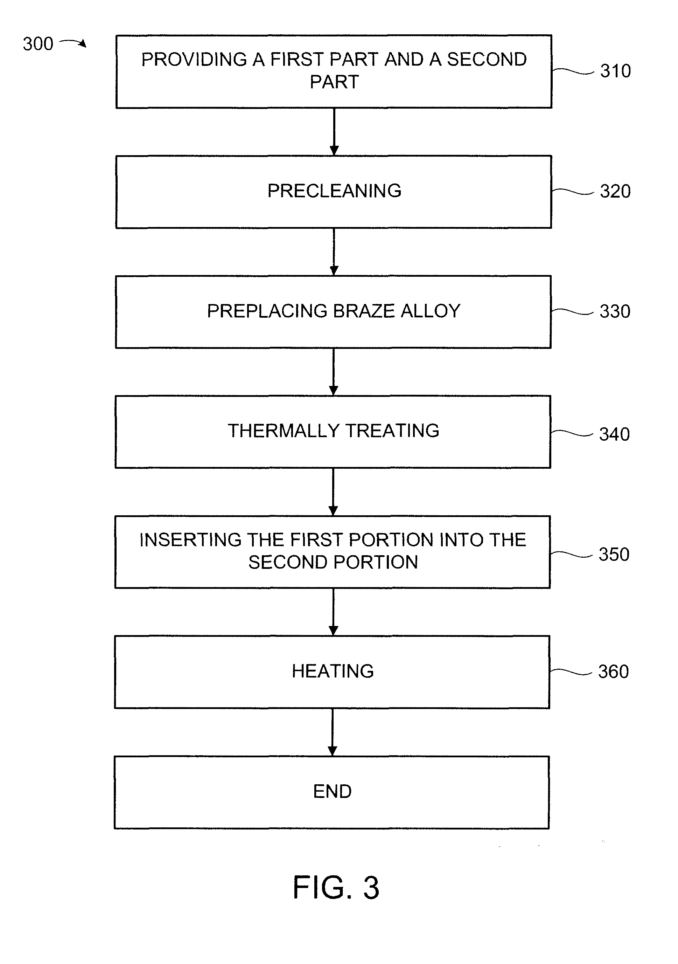

FIG. 3 is a flow chart of a brazing method 300 according to an aspect of the present invention. The brazing method 300 includes the steps of providing (step 310) a first part and a second part, where at least a first portion of the first part is configured to fit inside a second portion of the second part, precleaning (step 320) the first portion of the first part and the second portion of the second part, and preplacing a self-fluxing braze alloy (step 330) on one or more of the first portion and the second portion, thermally treating (step 340) at least one of the first portion and the second portion, to create a temperature differential between the first portion and second portion. Step 340 may include one or more of cooling the first portion and/or pre-heating the second portion. For example, the first portion could be cooled by immersing the first portion in a nitrogen bath. As another example, the second portion could be heated by induction heating. The method also includes the steps of inserting (step 350) the first portion into the second portion, and heating (step 360) at least one of the first portion and the second portion to melt the braze alloy. Method 300 joins the first portion to the second portion by brazing.

Method 300 may also include a step of providing an inert gas purge inside the second portion or an inert atmosphere in the area surrounding the joint and/or any heated or pre-heated elements. The braze alloy may be a BAg-18 alloy or a BAg-24 alloy. The thermal treatment and/or heating steps may be performed by induction heating, and one or both parts, or portions thereof may be heated to about 400 °F to about 500 °F. The heating step 360 may also be performed by induction heating, and both parts should be heated to about 1,200 °F to about 1,500 °F. As a further advantage provided by the present invention, a fluxing step and/or a fluxing step before the precleaning step may be avoided. Further, a cleaning step after the heating step may also be avoided so that one does not have to perform a cleaning step after the heating step. However, a cleaning step could be performed if desired.

Method 300 may also include the steps of providing the first part 110 made of copper and the second part 120 made of copper. Copper is to be understood as any predominantly copper alloy including but not limited to tough-pitch copper, oxygen-free copper, and silver-bearing copper. A thermal expansion or contraction during the thermal treatment step of the first portion or second portion provides a compression fitting (or fit-up) between the first portion 112 and the second portion 122 upon the first portion 112 and second portion 122 reaching a temperature equilibrium.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A brazing method (300) comprising:
providing (310) a first part (110) and a second part (120), at least a first portion (112) of the first part configured to fit inside a second portion (122) of the second part;
preplacing (330) a non-self-fluxing braze alloy (116) on one or more of the first portion and the second portion;
thermally treating (340) at least one of the first portion and the second portion, to create a temperature differential between the first portion and the second portion;
inserting (350) the first portion into the second portion;
heating (360) at least one of the first portion and the second portion to melt the non-self-fluxing braze alloy; and
wherein, the first portion is joined by brazing to the second portion.

2. The brazing method of claim 1, wherein the non-self-fluxing braze alloy (116) is a BAg-18 alloy.

3. The brazing method of claim 1 or claim 2, wherein the thermally treating step (340) further comprises:
cooling the first portion, to thermally contract the first portion.

4. The brazing method of claim 3, wherein the cooling step is performed by immersing the first portion in a nitrogen bath.

5. The brazing method of any preceding claim, wherein the thermally treating step (340) further comprises:
preheating the second portion, to thermally expand the second portion.

6. The brazing method of claim 5, wherein the preheating step is performed by induction heating.

7. The brazing method of claim 6, wherein the preheating step heats the second portion to about 400 F to about 500 F.

8. The brazing method of any preceding claim, wherein the heating step is performed by induction heating.

9. The brazing method of claim 8, wherein the heating step heats at least one of the first portion and the second portion to about 1,200 F to about 1,500 F.

10. The brazing method of any preceding claim, further comprising:
not performing a cleaning step after the heating step

11. The brazing method of any preceding claim, further comprising:
not performing a fluxing step before the preplacing step.

12. The brazing method of any preceding claim, wherein the providing a first part and a second part step further comprises:
providing the first part made of copper and the second part made of copper.

13. The brazing method of any preceding claim, comprising:
providing (310) a first part and a second part, at least a first portion of the first part configured to fit inside a second portion of the second part;
preplacing (330) a phosphorus free braze alloy on one or more of the first portion and the second portion;
cooling (340) the first portion to thermally contract the first portion, to create a temperature differential between the first portion and the second portion;
inserting (290) the first portion into the second portion;
heating (360) at least one of the first portion and the second portion to melt the phosphorus free braze alloy; and
wherein, the first portion is joined by brazing to the second portion.

14. The brazing method of any preceding claim, comprising:
providing (310) a first part and a second part, at least a first portion of the first part configured to fit inside a second portion of the second part;
preplacing (330) a non-self-fluxing braze alloy on one or more of the first portion and the second portion;
preheating (340) the second portion, to thermally expand the second portion, and to create a temperature differential between the first portion and the second portion;
inserting (250) the first portion into the second portion;
heating (360) at least one of the first portion and the second portion to melt the non-self-fluxing braze alloy; and
wherein, the first portion is joined by brazing to the second portion.
